# EUROPÄISCHE PATENTSCHRIFT

(11) **EP 1 543 305 B1**
(45) Veröffentlichungstag und Bekanntmachung des Hinweises auf die Patenterteilung: **02.09.2009**
(21) Anmeldenummer: 03770950.8
(22) Anmeldetag: 25.09.2003
(51) Int. Cl.: G01L 1/22, G01L 5/10

(54) **KRAFTAUFNEHMER ZUM MESSEN VON ACHSKRÄFTEN**
FORCE TRANSDUCER FOR MEASURING SHAFT FORCES
CAPTEUR DE FORCE SERVANT A MESURER DES FORCES D'ARBRE

(30) Priorität: 25.09.2002 DE 10245768
(43) Veröffentlichungstag der Anmeldung: 22.06.2005
(73) Patentinhaber: EBM Brosa Messgeräte GmbH & Co.KG, 88069 Tettnang (DE)
(72) Erfinder: PFEFFER, Otto, 88069 Tettnang (DE); FUTTERER, Bernd, D - 88069 Tettnang (DE)
(74) Vertreter: Heuckeroth, Volker
(86) Internationale Anmeldenummer: PCT/EP2003/010644
(87) Internationale Veröffentlichungsnummer: WO 2004/031712

(56) Entgegenhaltungen:
- US-A- 4 095 660
- US-A- 4 165 637
- US-A- 4 899 599

## Beschreibung

Die Erfindung betrifft einen Kraftaufnehmer zum Messen von Achskräften, die im wesentlichen quer auf eine Achse wirken, insbesondere eine Meßachse, mit einem sich längs erstreckenden Achskern und einer sich über im wesentlichen die Länge des Achskerns erstreckenden, den Achskern ummantelnden Hülse, die fest mit dem Achskern verbunden ist, wobei die Hülse ferner zumindest zwei voneinander beabstandete Auflagezonen aufweist, und wobei schließlich der Achskern im Bereich zwischen den Auflagezonen zumindest eine Kraftmeßzone zum Messen der Achskräfte aufweist, in der zumindest eine Kraftmeßeinrichtung angeordnet ist.

Ein derartiger Kraftaufnehmer ist US-A-4 095 660 bekannt.

Ein Kraftaufnehmer der eingangs genannten Art wird dazu verwendet, Kräfte zu messen, die im wesentlichen quer auf eine Achse oder Welle drehender Teile von Maschinen oder Anlagen wirken. Derartige Achskräfte können in einer rein radial auf die Achse wirkenden Kraft oder in einer Torsionskraft bestehen. Beispielsweise wird ein derartiger Kraftaufnehmer zum Messen von Achskräften bei Seilrollen verwendet, beispielsweise in Seilbahnen. Die Messung von Achskräften dient bei diesem Anwendungsfall insbesondere der Erfassung von Überbelastungen der Seilrollen, um Gefahrenzustände rechtzeitig erkennen zu können.

Wesentlicher Bestandteil der Kraftmessung ist der Achskern des Kraftaufnehmers, der im wesentlichen massiv ausgebildet ist. Der Achskern weist zumindest eine, üblicherweise zwei Kraftmeßzonen auf, in dem bzw. in denen jeweils zumindest ein Kraftmeßsystem angeordnet ist. Das Kraftmeßsystem erfaßt Scherkräfte, Dehnungen und Stauchungen im Achskern, und wandelt diese in meßbare Signale, üblicherweise elektrische Signale, zur Ermittlung der Kraft um. Beispielsweise weist das oder weisen die Kraftmeßsysteme Dehnungsmeßstreifen auf, die eine Kraftmessung über Widerstandsänderungen innerhalb einer oder mehrerer Brückenschaltungen ermöglichen.

Das Kraftmeßsystem, beispielsweise in Form von Dehnungsmeßstreifen, wird dabei auf der Oberfläche des Achskerns in den Kraftmeßzonen aufgebracht. In den Kraftmeßzonen weist der Achskern üblicherweise eine geringere Querschnittsabmessung auf, so daß sich dort die durch die Achskräfte verursachten Scherungen, Dehnungen und Stauchungen ausbilden.

Der aus dem zuvor genannten Dokument US-A-4 095 660 bekannte Kraftaufnehmer in Form einer Messachse weist eine Hülse auf, die mit dem Achskern, der die Kraftmesseinrichtungen aufweist, nicht fest verbunden, sondern über Rollenlager auf dem Achskern drehbar gelagert ist. Die eingeleitete Kraft oder Last wirkt auf die Umfangsoberfläche der Rollenlager.

Das oder die Kraftmeßsysteme müssen vor äußeren Einflüssen, beispielsweise Feuchtigkeit und Verschmutzung geschützt sein. Daher weisen derartige Kraftaufnehmer eine den Achskern im wesentlichen hermetisch abschließende Hülse auf, um das Eindringen von die Meßgenauigkeit beeinflussenden Verunreinigungen und Feuchtigkeit zu verhindern.

Kraftaufnehmer zum Messen von Achskräften werden üblicherweise zu ihrem Einsatzzweck in eine Art Aufnahmegabel oder ähnliche Lager eingelegt, wie dies beispielsweise im Anwendungsfall des Kraftaufnehmers zum Messen von Achskräften einer Seilrolle der Fall ist. Die Hülse, die den Achskern umgibt, weist dazu im Bereich ihrer Längsenden Auflagezonen auf, über die der Kraftaufnehmer an seinem Einsatzort festgelegt ist. Hierbei besteht jedoch häufig das Problem, daß die gegenüberliegenden Lager, in denen der Kraftaufnehmer gelagert ist, nicht exakt miteinander fluchten oder nicht parallel sind. Beim Einbauen des Kraftaufnehmers kann es dabei zu Verspannungen des Kraftaufnehmers kommen, die von der Kraftmeßeinrichtung bzw. den Kraftmeßeinrichtungen erfaßt werden, ohne daß es sich hierbei um eine Achskraft handelt, die gemessen werden soll. Die durch die Einbausituation des Kraftaufnehmers verursachten Kräfte sind daher parasitäre Kräfte, die die tatsächliche Kraftmessung erheblich verfälschen können. Hierbei ist zu berücksichtigen,
daß Kraftmeßeinrichtungen auf der Basis von Dehnungsmeßstreifen bereits auf Scherungen, Dehnungen und Stauchungen im Submillimeterbereich ansprechen, und daß Fertigungstoleranzen der Aufnahmelager, in die die Kraftaufnehmer eingebaut werden, zumindest ebenfalls in dieser Größenordnung liegen.

Beim Einbau des Kraftaufnehmers in nicht fluchtende oder nicht parallele Aufnahmen tritt zunächst eine Verspannung in der Hülse auf, die sich jedoch aufgrund der festen Verbindung mit dem Achskern auf diesen überträgt, so daß sich derartige, durch den Einbau des Kraftaufnehmers bedingte Verspannungen als parasitäre Kräfte auf das Kraftmeßsystem und damit auf die Genauigkeit der Kraftmessung negativ auswirken. Weitere parasitäre Kräfte, die die genaue Kraftmessung nachteilig beeinflussen, können auftreten, wenn die zu messende Kraft nicht exakt quer, sondern auch mit axialer Komponente in die Achse eingeleitet wird.

Der Erfindung liegt daher die Aufgabe zugrunde, einen Kraftaufnehmer der eingangs genannten Art dahingehend weiterzubilden, daß die Meßgenauigkeit des Kraftaufnehmers weitgehend unabhängig von der Einbausituation ist.

Erfindungsgemäß wird diese Aufgabe hinsichtlich des eingangs genannten Kraftaufnehmers dadurch gelöst, daß die Hülse im Bereich zwischen den Auflagezonen zumindest eine Biegezone aufweist, in der die Hülse in Richtung im wesentlichen quer zur Längsrichtung des Achskerns zur Aufnahme von die Kraftmessung negativ beeinflussenden parasitären Kräften biegsam ist.

Durch die erfindungsgemäße Ausgestaltung des Kraftaufnehmers werden die Kraftmessung negativ beeinflussende parasitäre Kräfte von der Biegezone der Hülse aufgenommen, ohne daß diese sich auf die Kraftmeßzone des Achskerns auswirken können, zumindest nicht in dem Ausmaß, daß sie die Kraftmessung nachhaltig beeinträchtigen. Durch die Biegezone wird mit anderen Worten eine Art Gelenk in der Hülse gebildet. Eine Nichtparallelität der Aufnahmelager für den Kraftaufnehmer oder nicht exakt quer zur Längsrichtung des Achskerns angreifende Kräfte, die auch eine Axialkomponente besitzen, wirken sich somit nicht mehr, zumindest nicht mehr in dem Ausmaß auf die Kraftmessung nachteilig aus. Die Biegezone kann beispielsweise durch eine entsprechende Dünnwandigkeit der Hülse im Bereich der Kraftmeßzone gegenüber dem übrigen Bereich der Hülse oder durch eine mehrteilige Ausgestaltung der Hülse realisiert sein. Die Hülse ist im Bereich der Biegezone bereits bei geringerer Krafteinwirkung verbiegsam, als es der Achskern ist.

In einer bevorzugten Ausgestaltung ist die zumindest eine Biegezone im Bereich der zumindest einen Kraftmeßzone angeordnet.

Hierbei ist von Vorteil, daß der Achskern in der Kraftmeßzone üblicherweise von der Hülse radial beabstandet ist, so daß sich eine Biegsamkeit der Hülse im Bereich der Kraftmeßzone besonders gut eignet, um an dieser Stelle eine Art Gelenk zu bilden, weil sich durch die Beabstandung des Achskerns von der Hülse im Bereich der Kraftmeßzone eine höhere Beweglichkeit der Hülse ergibt.

In diesem Zusammenhang ist es besonders bevorzugt, wenn die zumindest eine Biegezone sich über die gleiche axiale Länge erstreckt wie die Kraftmeßzone.

Diese Maßnahme hat den Vorteil, daß bei einer Biegung der Achse im Einsatz die Kraftmeßzone durch die Hülse im wesentlichen den gleichen Verformungsweg besitzt, wodurch unerwünschte Hystereseeffekte vermieden werden können. Durch diese Ausgestaltung werden die freie Zone von Hülse und Achskern aneinander angeglichen, was ihren Verformungsweg angeht.

In einer weiteren bevorzugten Ausgestaltung weist die Hülse in der Biegezone eine geringere Materialstärke auf als im übrigen Bereich der Hülse.

Hierbei ist von Vorteil, daß die Hülse insgesamt einstückig ausgebildet werden kann, so daß sie die Funktion einer hermetischen Abdichtung des Achskerns ohne zusätzliche Abdichtungsmaßnahmen erfüllen kann, wodurch die Produktionskosten einer solchen Hülse vorteilhafterweise gering gehalten werden können. Beispielsweise kann die Hülse in der Biegezone eine oder mehrere umfängliche radial eingebrachte Nuten aufweisen, um die geringere Materialstärke zu erhalten.

In einer weiteren bevorzugten Ausgestaltung ist die Hülse in der Biegezone im wesentlichen elastisch biegsam.

Hierbei ist von Vorteil, daß sich die Hülse nach ihrem Ausbau wieder selbständig zurückstellt, ohne daß eine bleibende Verformung der Hülse auftritt, so daß der Kraftaufnehmer dann anschließend an einem anderen Einsatzort wieder verwendet werden kann.

In einer weiteren bevorzugten Ausgestaltung ist die Biegezone im Querschnitt balgartig ausgebildet.

Diese Maßnahme hat den Vorteil, daß die "Gelenkigkeit" bzw. Biegeverformbarkeit besonders ausgeprägt werden kann, wodurch besonders starke Verspannungen aufgrund einer Nichtparallelität der Aufnahmelager für den Kraftaufnehmer bzw. eines Versatzes dieser Lager von der Hülse ohne negativen Einfluß auf die Kraftmeßzone aufgenommen werden können, ebenso wie nicht exakt quer zur Längsrichtung der Achse eingeleitete Kräfte, die eine Komponente in Längsrichtung des Achskerns aufweisen. Im einfachsten Fall weist die Biegezone im Querschnitt die Form eines oder mehrerer um 180° gegeneinander versetzter U auf.

In einer weiteren bevorzugten Ausgestaltung ist die zumindest eine Biegezone im Querschnitt gerade ausgebildet.

Die Ausgestaltung hat herstellungstechnisch gegenüber der balgartigen Ausgestaltung der Biegezone Vorteile, da die Geometrie der Biegezone einfacher ist als bei einer balgartigen Ausgestaltung der Biegezone.

Weiterhin ist es bevorzugt, wenn die Hülse aus zumindest zwei Hülsenabschnitten gebildet ist, die in Längsrichtung des Achskerns hintereinander und aneinander anstoßend angeordnet sind, ohne miteinander fest verbunden zu sein, wobei ein erster Hülsenabschnitt einen Biegeabschnitt aufweist, der dünnwandig ausgebildet ist, und dessen freies Ende mit dem Achskern fest verbunden ist.

Die mehrteilige Ausgestaltung der Hülse hat gegenüber einer einteiligen Ausgestaltung den Vorteil, daß die zur Ausgestaltung der Biegezone bzw. des Biegeabschnittes erforderlichen maschinellen Bearbeitungsvorgänge einfacher sind, da die Bearbeitungsvorgänge an den Enden der Hülsenabschnitte vorgenommen werden können. Des weiteren hat diese Maßnahme den Vorteil, daß die "Gelenkigkeit" der Biegezone durch die mehrteilige Ausgestaltung noch verbessert werden kann, wodurch die Meßgenauigkeit des Kraftaufnehmers noch weiter verbessert wird. Dadurch, daß der Biegeabschnitt mit dem Achskern fest verbunden ist, wird des weiteren trotz der mehrteiligen Ausgestaltung eine hermetische Abdichtung der Hülse gegen den Achskern erreicht, wodurch die Kraftmeßzone sicher gegen äußere Einflüsse, wie Verunreinigungen, Feuchtigkeit, die die Meßgenauigkeit ebenfalls beeinflussen können, geschützt ist.

Vorzugsweise ist das freie Ende mit einem Bund am Achskern umfänglich verschweißt.

In einer weiteren bevorzugten Ausgestaltung übergreift ein Endabschnitt eines zweiten Hülsenabschnitts den Biegeabschnitt des ersten Hülsenabschnitts, und der Endabschnitt ist gegenüber dem ersten Hülsenabschnitt abgedichtet.

Diese Maßnahme hat den Vorteil, daß sich keine Verunreinigungen zwischen dem ersten Hülsenabschnitt und dem zweiten Hülsenabschnitt ablagern können. Derartige Verunreinigungen könnten bei entsprechender Konsistenz verhärten und die Scherbewegung der Hülsenabschnitte relativ zueinander behindern und damit die Meßgenauigkeit wieder negativ beeinflussen. Die Abdichtung kann beispielsweise mittels einer oder mehreren O-Ringen ausgeführt sein.

In einer weiteren bevorzugten Ausgestaltung ist der Endabschnitt des zweiten Hülsenabschnitts auf seiner dem Biegeabschnitt zugewandten Seite freigedreht.

Hierbei ist von Vorteil, daß die Außenkontur der gesamten Hülse trotz des mehrteiligen Aufbaus und dem vorgesehenen Biegeabschnitt insgesamt gleichmäßig ohne Stufen und Durchmesseränderungen ausgeführt werden kann.

In einer weiteren besonders bevorzugten Ausgestaltung weist die Hülse zumindest zwei Biegezonen auf.

Durch das Vorsehen von zumindest zwei Biegezonen können aufgrund von Nichtparallelitäten der Aufnahmelager bzw. von schräg in die Achse eingeleiteten Kräften noch besser von der Hülse kompensiert werden, ohne daß sich die Kräfte auf die Kraftmeßzonen und damit nachteilig auf die genaue Kraftmessung auswirken, weil die Hülse zwei "Gelenke" besitzt.

Des weiteren ist es in diesem Zusammenhang bevorzugt, wenn die Hülse aus drei Hülsenabschnitten gebildet ist.

Hierbei ergeben sich zusätzlich die bereits zuvor genannten Vorteile der relativen Beweglichkeit der einzelnen Hülsenabschnitte zueinander, wobei diese relative Beweglichkeit in einer Scherbewegung der einzelnen Hülsenabschnitte zueinander besteht.

Weitere Vorteile und Merkmale ergeben sich aus der nachfolgenden Beschreibung und der beigefügten Zeichnung.

Es versteht sich, daß die vorstehend genannten und nachstehend noch zu erläuternden Merkmale nicht nur in der jeweils angegeben Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden mit Bezug auf diese hiernach näher beschrieben. Es zeigen:
- Fig. 1: eine Seitenansicht eines Kraftaufnehmers zum Messen von Achskräften in einer beispielhaften Einbausituation bei einem Seilrad, das teilweise im Schnitt dargestellt ist;
- Fig. 2: einen Längsschnitt durch den Kraftaufnehmer in Fig. 1;
- Fig. 3: eine vergrößerte Darstellung des Ausschnitts X in Fig. 2; und
- Fig. 4: eine Fig. 3 entsprechende Darstellung eines Ausschnitts eines Kraftaufnehmers gemäß eines weiteren Ausführungsbeispiels.

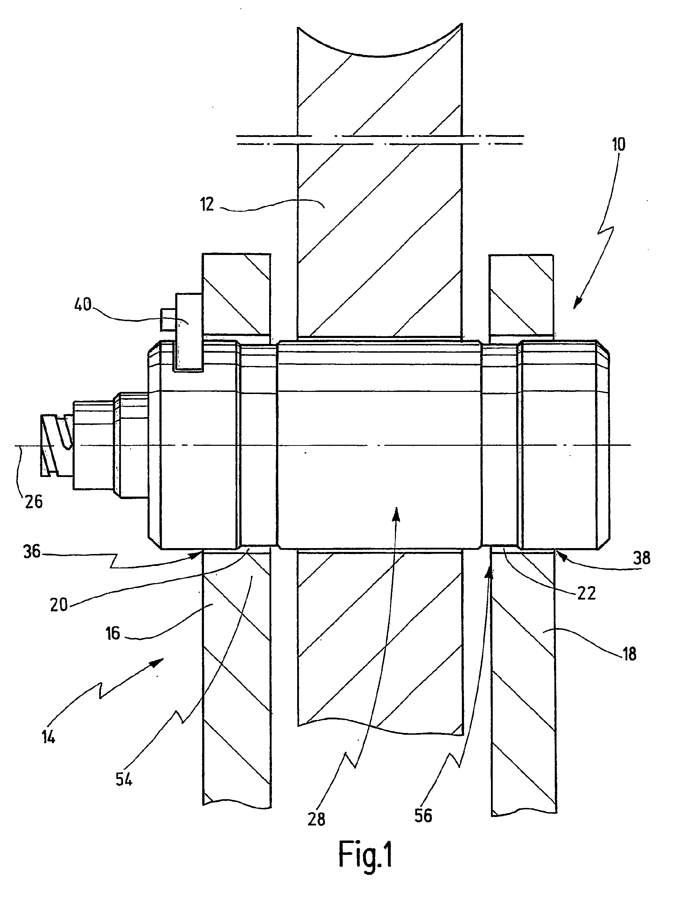

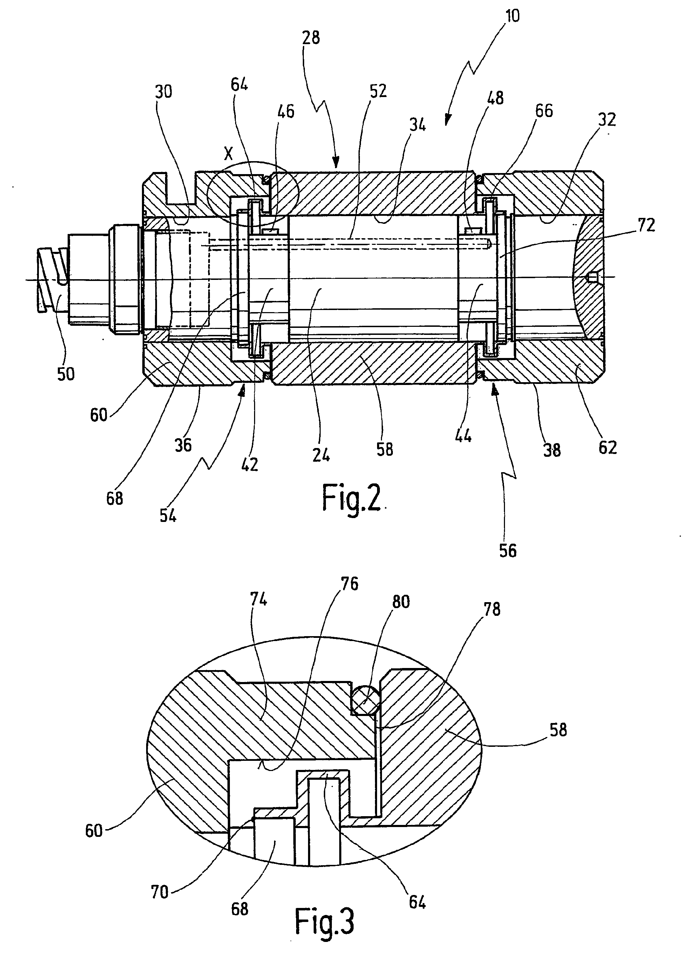

In Fig. 1 und 2 ist ein mit dem allgemeinen Bezugszeichen 10 versehener Kraftaufnehmer zum Messen von Achskräften, die im wesentlichen quer auf eine Achse wirken, dargestellt. Der Kraftaufnehmer 10 wird auch als Meßachse bezeichnet.

In Fig. 1 ist der Kraftaufnehmer 10 beispielhaft in einer Einbaulage als Meßachse für ein Seilrad 12 dargestellt. Mittels des Kraftaufnehmers 10 sollen die durch das nicht dargestellte Seil auf die Meßachse 10, die die Achse des Seilrades 12 bildet, im wesentlichen quer zur Meßachse 10 wirkenden Achskräfte, die auch in Torsionskräften bestehen können, zu messen.

Gemäß Fig. 1 ist der Kraftaufnehmer 10 in einer Art Aufnahmegabel 14, die zwei Schenkel 16 und 18 aufweist, in darin vorgesehenen Bohrungen 20 und 22 festgelegt.

Der Kraftaufnehmer 10 weist gemäß Fig. 2 einen Achskern 24 auf, der sich entlang einer Längsachse 26 des Kraftaufnehmers 10 erstreckt. Die zu messenden Achskräfte wirken senkrecht zur Längsachse 26.

Der Kraftaufnehmer 10 weist weiterhin eine sich über im wesentlichen die Länge des Achskerns 24 erstreckende, den Achskern 24 ummantelnde Hülse 28 auf. Der Achskern 24 und die Hülse 28 sind im wesentlichen zylindersymmetrisch ausgebildet.

Die Hülse 28 ist mit dem Achskern 24 fest verbunden. Dazu ist die Hülse 28 im Bereich von Endabschnitten 30 und 32 auf den insgesamt einstückig ausgebildeten Achskern 24 aufgeschrumpft.

Im Bereich ihrer Längsenden weist die Hülse 28 eine erste Auflagezone 36 und eine zweite Auflagezone 38 auf. Über die Auflagezonen 36 und 38 ist der Kraftaufnehmer 10 gemäß Fig. 1 in den Bohrungen 20 und 22 der Aufnahmegabel 14 gelagert. Über entsprechende, mit der Hülse 28 in Eingriff stehende Befestigungsmittel 40 ist der Kraftaufnehmer 10 in der Aufnahmegabel 14 befestigt.

Der Achskern 24 weist im Bereich zwischen den Auflagezonen 36 und 38 zwei Kraftmeßzonen zum Messen der Achskräfte auf, und zwar eine erste Kraftmeßzone 42 und eine zweite Kraftmeßzone 44.

In den Kraftmeßzonen 42 und 44 ist jeweils eine oder sind jeweils mehrere, hier schematisch angedeutete Kraftmeßeinrichtungen 46 und 48 angeordnet. Die Kraftmeßeinrichtungen 46 und 48 sind beispielsweise auf der Basis von Dehnungsmeßstreifen ausgebildet, die Spannungen, Dehnungen und Scherungen des Materials des Achskerns 24 in den Kraftmeßzonen 42 und 44 infolge der zu messenden Achskräfte durch eine Widerstandsänderung detektieren und in ein elektrisches Signal umwandeln. Dazu ist an dem Kraftaufnehmer 10 ein Anschluß 50 zum Anschließen eines elektrischen Versorgungs- und Signalübertragungskabels, das nicht dargestellt ist, vorgesehen, wobei zur Herstellung der elektrischen Verbindung mit den Kraftmeßeinrichtungen 46 und 48 eine entsprechende sich längserstreckende Sacklochbohrung 52 für Stromleitungen ausgebildet ist.

In den Kraftmeßzonen 42 und 44 weist der Achskern 24 einen geringeren Durchmesser auf als in seinen übrigen Bereichen, und in den Kraftmeßzonen 42 und 44 ist der Achskern 24 entsprechend von der Hülse 28 beabstandet. Durch die zu messenden Achskräfte bewirkte Dehnungen und Stauchungen des Materials des Achskerns 24 treten somit in den Kraftmeßzonen 42 und 44 ausgeprägt auf, wodurch die Kraftmeßeinrichtungen 46 und 48 diese Dehnungen und Stauchungen mit hoher Empfindlichkeit erfassen können.

Die Hülse 28 weist eine erste Biegezone 54 und eine zweite Biegezone 56 auf, in der die Hülse 28 in Richtung im wesentlichen quer zur Längsrichtung 26 des Achskerns 24 gegenüber dem übrigen Bereich der Hülse 28 mit geringerer Kraft biegsam ist, wie hiernach näher beschrieben wird.

Die Biegezonen 54 und 56 sind etwa im Bereich der Kraftmeßzonen 42 und 44 und zwischen den Auflagezonen 36 und 38 der Hülse 28 ausgebildet. Die Biegezonen 54 und 56 bilden jeweils eine Art Gelenk in der Hülse 28. Während die Biegezonen 54 und 56 insbesondere dadurch realisiert werden können, daß die Hülse 28 einstückig ist und im Bereich der Biegezonen 54 und 56 eine geringere Materialstärke aufweist als im übrigen Bereich der Hülse 28, sind die Biegezonen 54 und 56 der Hülse 28 wie folgt realisiert.

Die Hülse 28 ist aus drei Hülsenabschnitten gebildet, und zwar einem ersten (mittleren) Hülsenabschnitt 58, einem zweiten Hülsenabschnitt 60, der den einen Endabschnitt 30 der Hülse 28 bildet, und einem dritten Hülsenabschnitt 62, der den anderen Endabschnitt 32 der Hülse 28 bildet.

Jeder der Hülsenabschnitte 58, 60, 62 ist für sich an dem Achskern 24 befestigt, d.h. im vorliegenden Fall aufgeschrumpft. Die Hülsenabschnitte 58, 60, 62, die in Längsrichtung 26 des Achskerns 24 hintereinander angeordnet sind und aneinander anstoßen, sind jedoch untereinander nicht fest miteinander verbunden. Die Stoßstelle zwischen dem ersten Hülsenabschnitt 58 und dem zweiten Hülsenabschnitt 60 befindet sich etwa im Bereich der Kraftmeßzone 42, und die Stoßstelle zwischen dem ersten Hülsenabschnitt 58 und dem dritten Hülsenabschnitt 62 befindet sich etwa im Bereich der Kraftmeßzone 44 des Achskerns 24.

Der erste Hülsenabschnitt 58 weist, wie in der Ausschnittsvergrößerung in Fig. 3 besser zu erkennen ist, endseitig einen ersten dünnwandigen Biegeabschnitt 64 und am gegenüberliegenden Ende einen ebenfalls dünnwandigen zweiten Biegeabschnitt 66 auf. Die Biegeabschnitte 64 und 66 erstrecken sich an dem ersten Hülsenabschnitt 58 vollumfänglich. Die Biegeabschnitte 64 und 66 sind im Querschnitt balgartig ausgebildet, im vorliegenden Ausführungsbeispiel weisen sie etwa die Form eines U bzw. Q auf.

Die Biegeabschnitte 64 und 66, die zusammen mit der Mehrteiligkeit der Hülse 28 die Biegezonen 54 und 56 bilden, befinden sich etwa im Bereich der Kraftmeßzonen 42 bzw. 44.

Der erste Biegeabschnitt 64 ist mit seinem freien Ende mit einem am Achskern 24 ausgebildeten Bund 68, der einen größeren Durchmesser aufweist als die Kraftmeßzone 42, fest verbunden, indem er im gezeigten Ausführungsbeispiel mit dem Bund 168 entlang einer Schweißnaht 70 verschweißt ist. Hierdurch wird erreicht, daß die Kraftmeßzone 42, die die Kraftmeßeinrichtung bzw. Kraftmeßeinrichtungen 46 enthält, gegen das Eindringen von Verunreinigungen, Feuchtigkeit und dgl. hermetisch dicht geschützt ist.

Entsprechend ist auch der zweite Biegeabschnitt 66 des ersten Hülsenabschnitts 58 mit einem Bund 72 des Achskerns 24 fest verbunden, insbesondere verschweißt.

Der zweite Hülsenabschnitt 60 weist einen dem ersten Hülsenabschnitt 58 zugewandten Endabschnitt 74 auf, der den Biegeabschnitt 64 des ersten Hülsenabschnitts 58 außenseitig übergreift. Der Endabschnitt 74 ist dazu auf seiner dem Biegeabschnitt 64 zugewandten Seite 76 freigedreht. Wie bereits erwähnt, ist der erste Hülsenabschnitt 58 mit dem zweiten Hülsenabschnitt 60 nicht fest verbunden, sondern die beiden Hülsenabschnitte 58 und 60 bilden eine Stoßstelle 78, entlang der die Hülsenabschnitte 58 und 60 relativ zueinander beweglich sind, und zwar im wesentlichen quer zur Längsrichtung 26 des Kraftaufnehmers 10.

Um ein Eindringen von Verunreinigungen in den Bereich des Biegeabschnitts 64 zwischen den Hülsenabschnitten 58 und 60 zu vermeiden, ist die Stoßstelle 78 entsprechend durch eine O-Ringdichtung 80 abgedichtet, die jedoch nicht die durch die Biegsamkeit verliehene freie Beweglichkeit der Hülsenabschnitte 58 und 60 relativ zueinander behindert.

Die zuvor mit Bezug auf den Biegeabschnitt 64 und den zweiten Hülsenabschnitt 60 erfolgte Beschreibung gilt in entsprechender Weise auch für den zweiten Biegeabschnitt 66 und den dritten Hülsenabschnitt 62, wie sich aus der Darstellung in Fig. 2 ergibt.

Die Biegezonen 54 und 56 der Hülse 28 des Kraftaufnehmers 10 bewirken nun vorteilhafterweise, daß sich beispielsweise durch die Einbausituation des Kraftaufnehmers verursachte Verspannungen, die beispielsweise in einer Nichtparallelität oder einem Achsenversatz der Bohrungen 20 und 22 der Aufnahmegabel 14 ihre Ursache haben kann, nicht auf den Achskern 24 übertragen, sondern mehr oder weniger allein von der Hülse 28 in den Biegezonen 54 und 56 aufgenommen werden, wodurch die Einbausituation, die in der Regel nicht veränderbar ist, Meßgenauigkeit des Kraftaufnehmers 10 nicht beeinträchtigt.

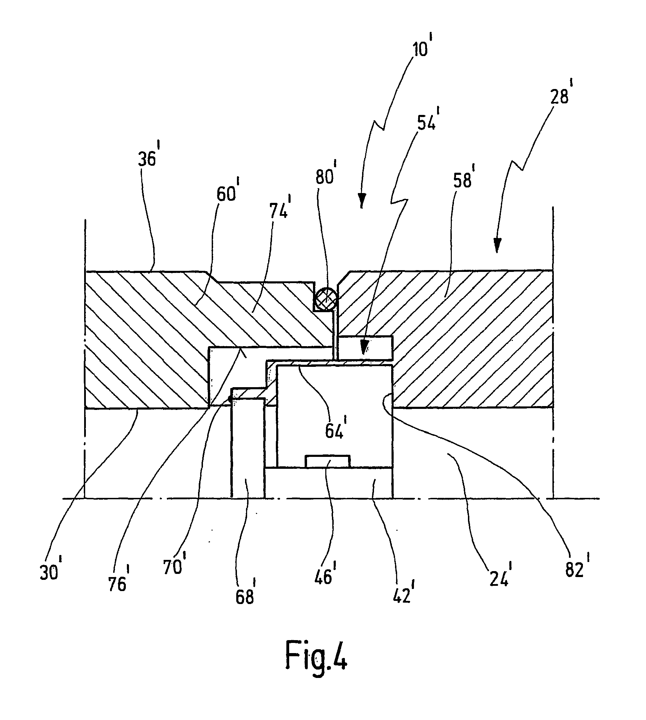

In Fig. 4 ist ein gegenüber dem Kraftaufnehmer 10 modifiziertes Ausführungsbeispiel eines Kraftaufnehmers 10' ausschnittsweise dargestellt. Der in Fig. 4 dargestellte Ausschnitt des Kraftaufnehmers 10' entspricht im wesentlichen dem Ausschnitt des Kraftaufnehmers 10, der in Fig. 3 dargestellt ist. In Fig. 4 sind Teile bzw. Merkmale, die mit denjenigen des Kraftaufnehmers 10 gleich oder vergleichbar sind, mit gleichen Bezugszeichen mit einem hochgestellten Strich versehen. Nachfolgend werden lediglich die Unterschiede des Kraftaufnehmers 10' zu dem Kraftaufnehmer 10 beschrieben.

Die Unterschiede des Kraftaufnehmers 10' zu dem Kraftaufnehmer 10 beziehen sich auf die Ausgestaltung der Biegezonen, wie für die Biegezone 54' dargestellt ist. Die Biegezone 54' erstreckt sich in Längsrichtung des Kraftaufnehmers 10 über die gleiche Länge wie die Kraftmeßzone 42', in der die Kraftmeßeinrichtung 46' angeordnet ist.

Die Biegezone 54' wird durch einen mit dem ersten Hülsenabschnitt 58' vorzugsweise verbundenen Biegeabschnitt 64' gebildet, der wiederum mit seinem freien Ende mittels einer Schweißnaht 70' an den Bund 68' des Achskerns 24' befestigt ist.

Um zu erreichen, daß sich die Biegezone 54' über die gleiche oder im wesentlichen die gleiche Länge erstreckt wie die Kraftmeßzone 42', ist der erste Hülsenabschnitt 58' im Bereich des Ansatzes des Biegeabschnittes 64' durch Materialaussparung, hier in Form eines Planeinstichs teilweise zurückgesetzt bzw. freigearbeitet, so daß der Biegeabschnitt 64' eine entsprechende Länge aufweist, die der Länge der Kraftmeßzone 42' entspricht. Auf diese Weise bildet die Biegezone 54' ein langes, dünnes Gelenk.

In dem gezeigten Ausführungsbeispiel ist der Biegeabschnitt 64' gerade, d.h. nicht balgartig ausgebildet, jedoch kann auch eine balgartige Ausgestaltung wie bei dem Biegeabschnitt 64 des Kraftaufnehmers 10 in Betracht gezogen werden.

## Patentansprüche

1. Kraftaufnehmer zum Messen von Achskräften, die im Wesentlichen quer auf eine Achse wirken, insbesondere Messachse, mit einem sich längs erstreckenden Achskern (24; 24') und einer sich über im Wesentlichen die Länge des Achskerns (24; 24') erstreckenden, den Achskern (24; 24') ummantelnden Hülse (28; 28'), die fest mit dem Achskern (24; 24') verbunden ist, wobei die Hülse (28; 28') ferner zumindest zwei voneinander beabstandete Auflagezonen (36, 38; 36') aufweist, und wobei schließlich der Achskern (24; 24') im Bereich zwischen den Auflagezonen (36, 38; 36') zumindest eine Kraftmesszone (42, 44; 42') zum Messen der Achskräfte aufweist, in der zumindest eine Kraftmesseinrichtung (46, 48; 46') angeordnet ist, **dadurch gekennzeichnet, dass** die Hülse (28; 28') im Bereich zwischen den Auflagezonen (36, 38; 36') zumindest eine Biegezone (54, 56; 54') aufweist, in der die Hülse (28; 28') in Richtung im Wesentlichen quer zur Längsrichtung des Achskerns (24; 24') zur Aufnahme von die Kraftmessung negativ beeinflussenden parasitären Kräften biegsam ist.

2. Kraftaufnehmer nach Anspruch 1, **dadurch gekennzeichnet, dass** die zumindest eine Biegezone (54, 56; 54') im Bereich der zumindest einen Kraftmesszone (42, 44; 42') angeordnet ist.

3. Kraftaufnehmer nach Anspruch 2, **dadurch gekennzeichnet, dass** die zumindest eine Biegezone (54') sich über die gleiche axiale Länge erstreckt wie die Kraftmesszone (42').

4. Kraftaufnehmer nach einem der Ansprüche 1 bis 3, **dadurch gekennzeichnet, dass** die Hülse (28; 28') in der Biegezone (54, 56; 54') eine geringere Materialstärke aufweist als im übrigen Bereich der Hülse (28; 28').

5. Kraftaufnehmer nach einem der Ansprüche 1 bis 4, **dadurch gekennzeichnet, dass** die Hülse (28; 28') in der Biegezone (54, 56; 54') im Wesentlichen elastisch biegsam ist.

6. Kraftaufnehmer nach einem der Ansprüche 1 bis 5, **dadurch gekennzeichnet, dass** die Biegezone (54, 56) im Querschnitt balgartig ausgebildet ist.

7. Kraftaufnehmer nach einem der Ansprüche 1 bis 5, **dadurch gekennzeichnet, dss** die Biegezone (54') im Querschnitt gerade ausgebildet ist.

8. Kraftaufnehmer nach einem der Ansprüche 1 bis 7, **dadurch gekennzeichnet, dass** die Hülse (28; 28') aus zumindest zwei Hülsenabschnitten (58, 60, 62; 58', 60') gebildet ist, die in Längsrichtung des Achskerns (24; 24') hintereinander und aneinander anstoßend angeordnet sind, ohne miteinander fest verbunden zu sein, wobei ein erster Hülsenabschnitt (58; 58') zumindest einen Biegeabschnitt (64, 66; 64') aufweist, der dünnwandig ausgebildet ist, und dessen freies Ende mit dem Achskern (24; 24') fest verbunden ist.

9. Kraftaufnehmer nach Anspruch 8, **dadurch gekennzeichnet, dass** ein Endabschnitt (74; 74') eines zweiten Hülsenabschnitts (60, 62; 60') den Biegeabschnitt (64, 66; 64') des ersten Hülsenabschnitts (58; 58') außenseitig übergreift und gegenüber dem ersten Hülsenabschnitt (58; 58') abgedichtet ist.

10. Kraftaufnehmer nach Anspruch 9, **dadurch gekennzeichnet, dass** der Endabschnitt (74; 74') des zweiten Hülsenabschnitts (60, 62; 60') auf seiner dem Biegeabschnitt (64, 66; 64') zugewandten Seite freigedreht ist.

11. Kraftaufnehmer nach einem der Ansprüche 1 bis 10, **dadurch gekennzeichnet, dass** die Hülse (28; 28') zumindest zwei Biegezonen (54, 56; 54') aufweist.

12. Kraftaufnehmer nach Anspruch 11, **dadurch gekennzeichnet, dass** die Hülse (28; 28') aus zumindest drei Hülsenabschnitten (58, 60, 62; 58', 60') gebildet ist.

## Claims

1. A force transducer for measuring axial forces which act essentially transversely on an axis, in particular on a measuring axis, comprising an axis core (24; 24') extending longitudinally, and a sleeve (28; 28') extending substantially over the length of the axis core (24; 24'), and jacketing the axis core (24; 24'), which sleeve is fixedly connected with the axis core (24; 24'), wherein the sleeve (28; 28') further has at least two bearing zones (36, 38; 36') spaced apart from one another, and wherein finally the axis core (24; 24') has at least one force measuring zone (42, 44; 42') in the region between the bearing zones (36, 38; 36') for measuring the axial forces, in which force measuring zone at least one force measuring device (46, 48; 46') is arranged, **characterized in that** the sleeve (28; 28') has at least one bending zone (54, 56; 54') in the region between the bearing zones (36, 38; 36'), in which bending zone the sleeve (28; 28') is bendable in direction substantially transverse to the longitudinal direction to the axis core (24; 24') for absorbing parasitic forces having a negative impact on the force measuring.

2. The force transducer of claim 1, **characterized in that** the at least one bending zone (54, 56; 54') is arranged in the region of the at least one force measuring zone (42, 44; 42').

3. The force transducer of claim 2, **characterized in that** the at least one bending zone (54') extends over the same axial length as the force measuring zone (42').

4. The force transducer of any one of claims 1 through 3, **characterized in that** the sleeve (28; 28') has a lower material thickness in the bending zone (54, 56; 54') than in the remaining region of the sleeve (28; 28').

5. The force transducer of any one of claims 1 through 4, **characterized in that** the sleeve (28; 28') is substantially elastically bendable in the bending zone (54, 56; 54').

6. The force transducer of any one of claims 1 through 5, **characterized in that** the bending zone (54, 56) is configured in bellows-like fashion in cross-section.

7. The force transducer of any one of claims 1 through 5, **characterized in that** the bending zone (54') is configured straight in cross-section.

8. The force transducer of any one of claims 1 through 7, **characterized in that** the sleeve (28; 28') is formed by at least two sleeve portions (58, 60, 62; 58', 60'), which are arranged one after another and adjacent to one another in longitudinal direction of the axis core (24; 24'), without being fixedly connected with one another, wherein a first sleeve portion (58; 58') has at least one bending portion (64, 66; 64') configured in thin-walled fashion, a free end of which is fixedly connected to the axis core (24; 24').

9. The force transducer of claim 8, **characterized in that** an end portion (74; 74') of a second sleeve portion (60, 62; 62') lapps over the bending portion (64, 66; 64') of the first sleeve portion (58; 58') on an outer side and is sealed against the first sleeve portion (58; 58').

10. The force transducer of claim 9, **characterized in that** the end portion (74; 74') of the second sleeve portion (60, 62; 60') is turned free on a lathe on its side facing the bending portion (64, 66; 64').

11. The force transducer of anyone of claims 1 through 10, **characterized in that** the sleeve (28; 28') has at least two bending zones (54, 56; 54').

12. The force transducer of claim 11, **characterized in that** the sleeve (28; 28') is formed by at least three sleeve portions (58, 60, 62; 58', 60').

## Revendications

1. Capteur de force servant à mesurer des forces d'arbre, qui agissent essentiellement transversalement sur un arbre, en particulier un arbre de mesure, avec un noyau d'arbre (24 ; 24') s'étendant longitudinalement et une douille (28 ; 28') enveloppant le noyau d'arbre (24 ; 24'), s'étendant essentiellement sur la longueur du noyau d'arbre (24 ; 24'), laquelle douille est reliée solidement au noyau d'arbre (24 ; 24'), la douille (28 ; 28') présentant en outre au moins deux zones d'appui (36, 38 ; 36') espacées l'une de l'autres, et enfin le noyau d'arbre (24 ; 24') présentant dans la zone entre les zones d'appui (36, 38 ; 36'), au moins une zone de mesure de force (42, 44 ; 42') servant à mesurer les forces d'arbre, dans laquelle est disposé au moins un dispositif de mesure de force (46, 48 ; 46'), **caractérisé en ce que** la douille (28 ; 28') présente dans la zone entre les zones d'appui (36, 38 ; 36') au moins une zone de flexion (54 , 56 ; 54') dans laquelle la douille (28 ; 28') est flexible dans la direction essentiellement transversale au sens longitudinal du noyau d'arbre (24 ; 24') pour absorber des forces parasites influençant négativement la mesure de force.

2. Capteur de force selon la revendication 1, **caractérisé en ce que** l'au moins une zone de flexion (54, 56 ; 54') est disposée dans la zone de l'au moins une zone de mesure de force (42, 44 ; 42').

3. Capteur de force selon la revendication 2, **caractérisé en ce que** l'au moins une zone de flexion (54') s'étend sur la même longueur axiale que la zone de mesure de force (42').

4. Capteur de force selon l'une quelconque des revendications 1 à 3, **caractérisé en ce que** la douille (28 ; 28') présente dans la zone de flexion (54, 56 ; 54') une épaisseur de matériau inférieure à celle du reste de la zone de la douille (28 ; 28').

5. Capteur de force selon l'une quelconque des revendications 1 à 4, **caractérisé en ce que** la douille (28 ; 28') est flexible de manière essentiellement élastique dans la zone de flexion (54, 56 ; 54').

6. Capteur de force selon l'une quelconque des revendications 1 à 5, **caractérisé en ce que** la zone de flexion (54, 56) est réalisée avec une section transversale de type soufflet.

7. Capteur de force selon l'une quelconque des revendications 1 à 5, **caractérisé en ce que** la zone de flexion (54') est réalisée avec une section transversale rectiligne.

8. Capteur de force selon l'une quelconque des revendications 1 à 7, **caractérisé en ce que** la douille (28 ; 28') est formée d'au moins deux sections de douille (58, 60, 62 ; 58', 60'), qui sont disposées l'une derrière l'autre dans le sens longitudinal du noyau d'arbre (24 ; 24') et s'appuyant l'une contre l'autre, sans être reliées solidement l'une à l'autre, une première section de douille (58 ; 58') présentant au moins une section de flexion (64, 66 ; 64'), qui est réalisée à paroi mince et dont l'extrémité libre est reliée solidement au noyau d'arbre (24 ; 24').

9. Capteur de force selon la revendication 8, **caractérisé en ce qu'**une section d'extrémité (74 ; 74') d'une deuxième section de douille (60, 62 ; 60') recouvre l'extérieur de la section de flexion (64, 66 ; 64') de la première section de douille (58 ; 58') et est étanchée par rapport à la première section de douille (58 ; 58').

10. Capteur de mesure selon la revendication 9, **caractérisé en ce que** la section d'extrémité (74 ; 74') de la deuxième section de douille (60, 62 ; 60') est dégagée au tour sur son côté tourné vers la section de flexion (64, 66 ; 64').

11. Capteur de force selon l'une quelconque des revendications 1 à 10, **caractérisé en ce que** la douille (28 ; 28') présente au moins deux zones de flexion (54, 56 ; 54').

12. Capteur de force selon la revendication 11, **caractérisé en ce que** la douille (28 ; 28') est formée d'au moins trois sections de douille (58, 60, 62 ; 58', 60').
